Europäisches Patentamt

European Patent Office

Office européen des brevets

(19)

(11) Publication number: **0 266 097**
**A2**

# EUROPEAN PATENT APPLICATION

(12)

(21) Application number: **87309110.2**

(22) Date of filing: **15.10.87**

(51) Int. Cl.⁴: **F17D 3/08**

(30) Priority: **23.10.86 GB 8625423**

(43) Date of publication of application:
**04.05.88 Bulletin 88/18**

(84) Designated Contracting States:
**DE ES FR GB IT NL**

(71) Applicant: **International Testing and Commissioning Ltd**
**Unit 11,Workspace 17 Highfield Street**
**Coalville Leics. LE6 2BR(GB)**

(72) Inventor: **Garton, Michael**
**7 Willesley Road**
**Ashby-de-la-Zouch Leicester LE6 5QA(GB)**

(74) Representative: **Prutton, Roger et al**
**MARKS & CLERK Alpha Tower Suffolk Street**
**Queensway**
**Birmingham B1 1TT(GB)**

(54) Pipeline pig launching and receiving apparatus.

(57) A pipeline pig launching and receiving apparatus comprises a barrel 10, an adaptor 11 for connecting the barrel to a specific size of pipeline, a removable cassette 12, within the barrel, the cassette being designed for a specific size of pipeline and at least one pig 13 within the cassette. The barrel is provided with a plurality of connectors 10 $^a$ communicating with separate chambers within the barrel which are defined by baffles 12$^a$ on the exterior of the cassette. The cassette is formed with ports through which pressurised fluid supplied via the connectors 10$^a$ can enter the cassette and launch pigs therein one at a time into the pipeline.

EP 0 266 097 A2

## PIPELINE PIG LAUNCHING AND RECEIVING APPARATUS

This invention relates to apparatus for launching and receiving pipeline pigs which are used for cleaning pipelines, marking the end of batches, and other more sophisticated purposes.

Generally speaking a pig launching station includes a barrel which is dimensioned specifically to suit one particular size of pipeline and which is arranged to receive a single pig for launching, which is effected by pumping the pipeline medium into the barrel at high pressure behind the pig after various valving has been opened to open communication between the barrel and the pipeline.

Many different sizes of pipeline are in use and as a result of this it has not been considered possible in the past to make use of a transportable pig launching system. The total capital cost of fixed pig launching apparatus on a particular pipeline can therefore be very high.

Moreover, loading of a pig into a fixed launching apparatus must be carried out on site, often in extremely difficult environmental conditions.

It is an object of the present invention to provide a simple pig launching and receiving apparatus in which the above mentioned difficulties are substantially overcome.

A pig launching and receiving apparatus in accordance with the invention comprises a barrel, an adaptor for connecting said barrel to a pipeline installation, said adaptor being removably connected to the barrel and being designed to be used with a pipeline of a specific diameter, a removable cassette containing at least one pig within the barrel, the cassette and pig being designed to be used with a pipeline of said specific diameter, spaced annular flanges on the cassette dividing the interior of the barrel into a plurality of separate chambers, the cassette having at least one port through which its interior communicates with one of said chambers and the barrel having connection means thereon for supplying fluid under pressure to said one of the chambers. The fluid may be either a liquid or a gas.

Preferably the cassette contains a plurality of pigs.

With such an arrangement it is a relatively simple matter to transport a single standard barrel to a remote site with a selection of different adaptors and pre-loaded cassettes so that a pig launching station can be quickly and simply installed. The cassette protects the pig or pigs it contains from damage during transport and, can be re-used once all the pigs it originally contained have been launched.

In the accompanying drawings:-

Figure 1 is a cut-away, perspective view of one example of a pig launching and receiving apparatus in accordance with the invention;

Figure 2 is a longitudinal section of the apparatus shown in Figure 1;

Figure 3 is a fragmentary section showing the apparatus in use on a larger diameter pipeline;

Figure 4 and 5 are fragmentary sections showing an alternative adaptor arrangement for two different pipe sizes;

Figures 6 to 8 are diagrammatic views showing the successive launching of three pigs from the apparatus shown in Figures 1 and 2;

Figures 9 to 11 are diagrams showing successive stages of receiving a pig; and

Figure 12 is a section like Figure 2, but showing the apparatus with an added barrel extension and a cassette designed to launch or receive a single elongated pig such as a so called "intelligent" pig.

The launching apparatus shown includes a barrel 10 which is releasably attached at one end to an adaptor 11. The adaptor 11 has a standard fitting at one end to fit the barrel 10 and a fitting at the other end adapted to be attached to a pipeline of a specific internal diameter. Various different adaptors are used to enable the barrel 10 to be mounted on different pipelines.

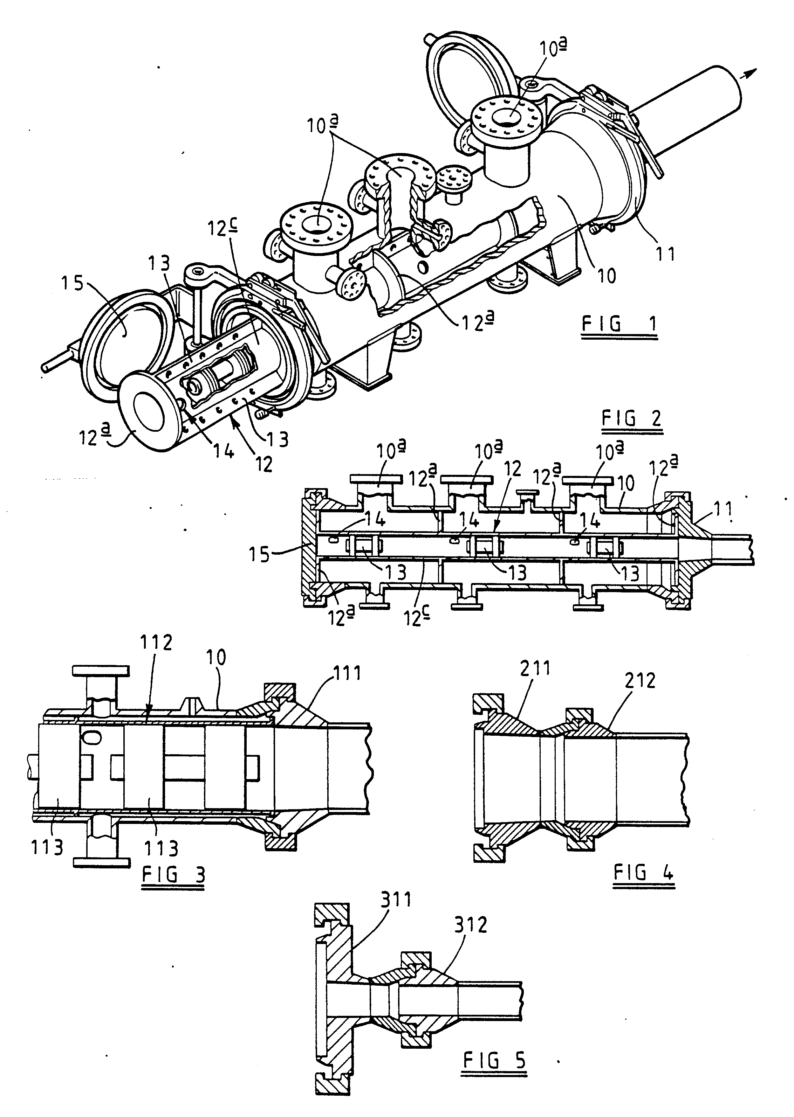

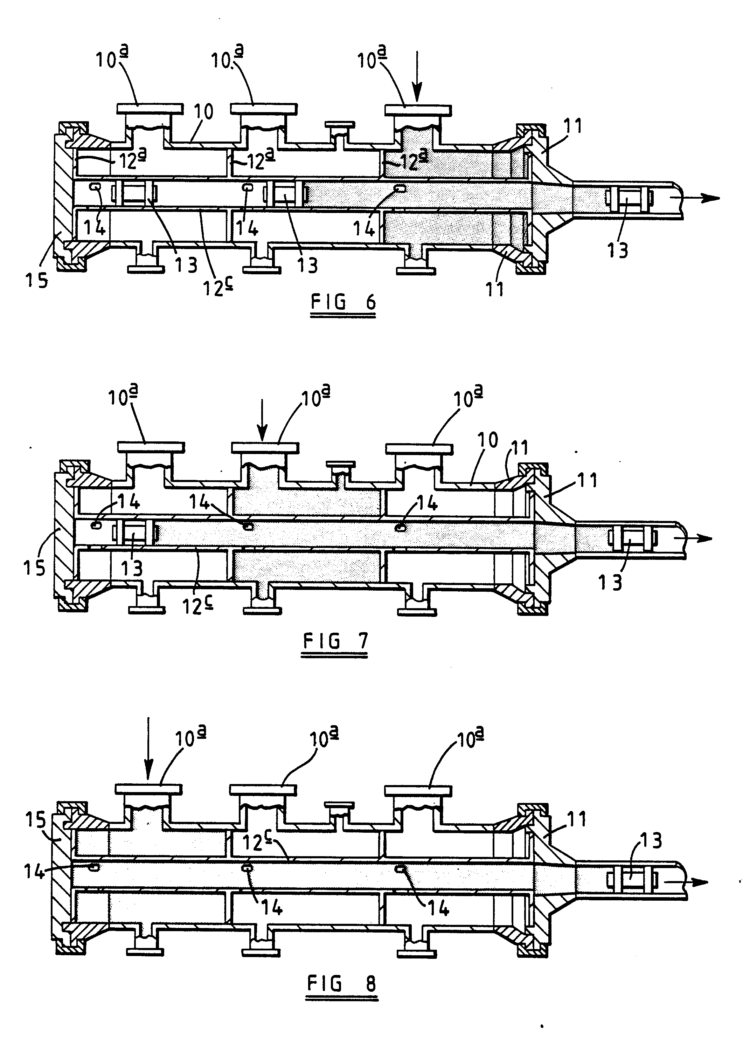

In the arrangements shown in Figures 1, 2 and 3, the adaptors (11,111) are actually permanently joined (e.g. by welding) to the pipe end. In Figures 4 and 5, on the other hand an alternative arrangement is shown, in which the adaptors 211, 311 are releasably attached to the pipe end using connectors 212, 312, thereby allowing a closure of a size appropriate to the pipe size to be used on the connector when the adaptor is removed, rather than the standard barrel sized closure which is needed for the arrangements of Figures 1, 2 and 3.

A cassette 12 (or 112 in Figure 3) is used for supporting one or more pigs 13 in the barrel 10. The cassette has annular flanges $12^a$ which fit closely inside the barrels and seal rings (not shown) may be provided on these flanges to provide a seal between the flanges $12^a$ and the interior of the barrel 10. Such seals are not, however, essential, provided that the flanges fit closely enough to restrict flow severely. The flanges divide the interior of the barrel into several chambers. The cassette includes a central pipe portion $12^c$, which is of approximately the same internal diameter as the pipeline with which the cassette is intended to be used. The pipe portion $12^c$ contains the pigs 13. The exterior of the cassette may be provided, as shown, with various strengthening fins 13, braces etc. and the pipe portion is formed with a series of ports 14, there being one set of ports corresponding to each annular chamber into which the barrel is divided by the fins when the cassette is inserted into the chamber.

The barrel is provided with connectors $10^a$ by means of which each of the chambers referred to above can be connected via valves (not shown) either to a high pressure supply or to a drain.

In use, when a barrel has been attached to the pipeline using the appropriate adaptor, the preloaded cassette of pigs is inserted and end closure 15 is attached to the free end of the barrel. The pigs can then be launched one at a time when required into the pipeline by applying pressurised fluid behind the pig nearest the adaptor 11, through the appropriate valving and the ports in the cassette.

As shown in Figure 6, the first pig 13 is launched by applying pressurised fluid to the connector $10^a$ nearest the adaptor 11. The pressurised fluid can enter the port 14 nearest the adaptor end, via the end chamber, but is prevented from flowing into the other ports 14 by the intervening flange bounding this chamber. The valves controlling the other two connectors $10^a$ are kept closed at this time so that the middle one of the three pigs in the cassette remains stationary and the pig at the adaptor end is expelled into the pipe and thereafter into the pipeline itself by known means.

To launch the second pig, the valves associated with the two end connectors $10^a$ are closed and pressurised fluid is admitted to the middle chamber (Figure 7). Finally, the third pig can be launched by applying pressurised fluid to the third one of the connectors $10^a$ only.

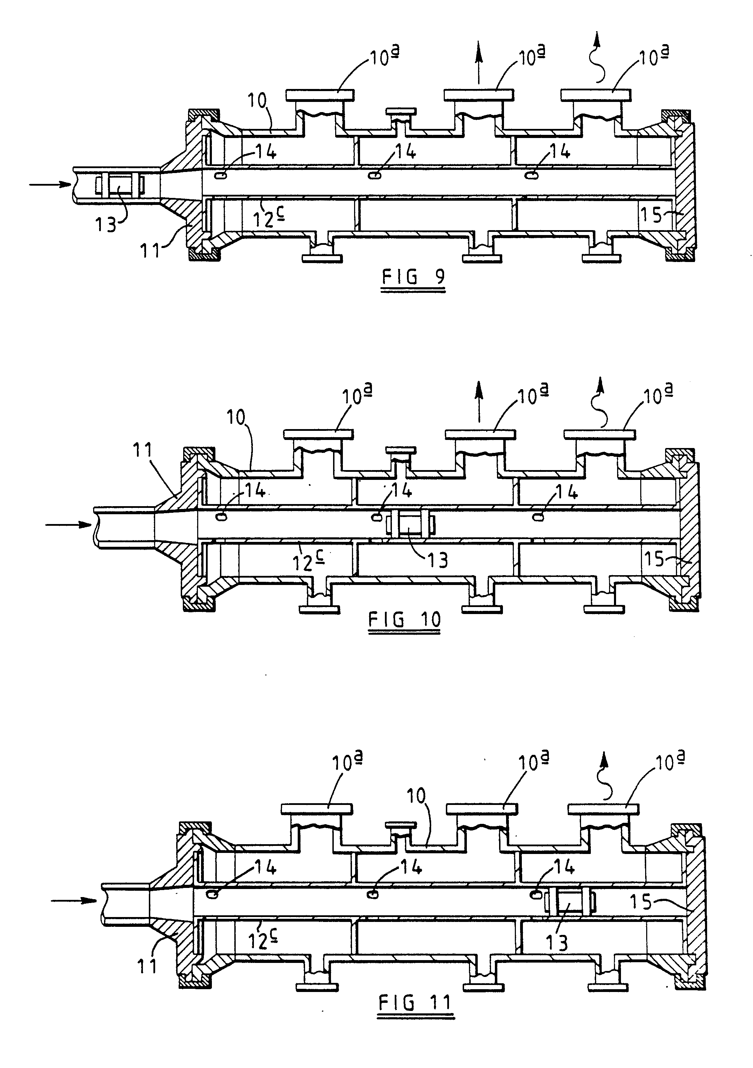

When the apparatus is set up for receiving pigs from the pipeline, the cassette is inserted in the barrel in a reversed position so that the ports 14, which were adjacent the end of their respective chambers nearest the closure, are at the ends of their respective chambers nearest the adaptor (see Figures 9 to 11).

To receive a first pig, the connector $10^a$ for the middle of the three chambers is connected by its valve to drain, whereas the valve associated with the connector $10^a$ furthest from the adaptor is opened only slightly to drain so that only restricted through flow can occur. When a full bore valve in the pipe connecting the pipeline to the adaptor 11 is opened, the pig enters the cassette and comes to rest having just passed the port 14 opening into the middle chamber. The valve associated with the middle connector $10^a$ is then closed so that the pig is moved to its final position, as shown in Figure 11, just past the port 14 at the closure end. Two further pigs are received by similar sequences of operations and finally stop just past the other two ports 14.

The arrangement described above has several significant advantages over conventional pig launching apparatus.

As mentioned above, the use of interchangeable components makes it feasible for temporary pig launching stations to be set up in difficult environmental conditions. Many different types of pigs can be handled including long, articulated intelligent pigs which are used in some applications.

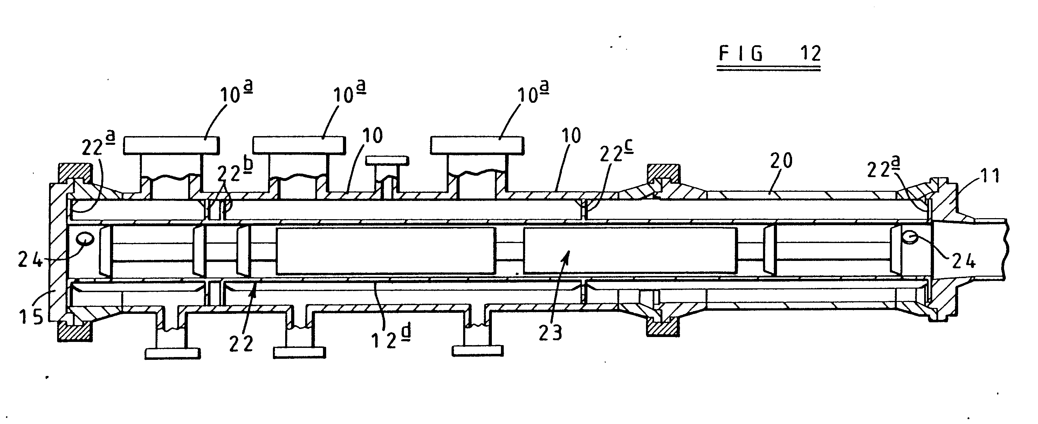

Figure 12 shows the apparatus set up for launching or receiving such a long articulated intelligent pig. To accommodate this long pig, an extension barrel 20 is attached between the adaptor 11 and the barrel 10, as shown, or is attached directly to the end of the barrel 10 at the closure 15. The cassette 22 extends from the closure 15, through the barrel and the extension barrel to the adaptor 11 and has annular flanges $22^a$ at opposite ends and a pair of further annular flanges $22^b$ arranged side by side at a position where they lie between the connector $10^a$ at the closure end and the middle connector $10^a$. A further annular flange $22^c$ is provided to give support to the cassette at a position near the adaptor end of the barrel, but this flange $22^c$ is perforated to allow free fluid flow. The space within the barrel and extension barrel is thus effectively divided into just two chambers one of which has the closure end connector $10^a$ connected to it and the other of which has the other two connectors connected to it. The cassette pipe portion $22^d$ has ports 24 adjacent the two end flanges $22^a$ respectively.

To launch the pig 23, the valve associated with the closure end connector $10^a$ is opened to admit pressurised fluid and the other two valves are shut. The double flanges $22^b$ ensure that flow along the barrel is substantially prevented and the pig 23 is accelerated away into the pipeline. To receive a pig, the valve of the closure end connector $10^a$ provides a restricted connection to drain, whilst the valves of the other two connectors are opened to drain. This causes the pig 23 to be brought to rest in the position shown, i.e. when its trailing end has just passed the adaptor end port 24.

Pigs of this kind may contain delicate telemetry equipment and the cassette provides a useful transport container for it, protecting it from many environmental and handling hazards.

When pigs have been received into a cassette it can be removed from the barrel and handled with the pigs inside it. This can be a considerable advantage in situations where the pigs are being used for pipeline cleaning as there is no need to handle a heavily fouled pig. The pig can remain, with all the foreign matter it carries with it, inside the cassette.

## Claims

1. A pig launching and receiving apparatus comprising a barrel, an adaptor for connecting said barrel to a pipeline installation, said adaptor being removably connected to the barrel and being designed to be used with a pipeline of a specific diameter, a removable cassette containing at least one pig within the barrel, the cassette and pig being designed to be used with a pipeline of said specific diameter, spaced annular flanges on the cassette dividing the interior of the barrel into a plurality of separate chambers, the cassette having at least one port through which its interior communicates with one of said chambers and the barrel having connection means thereon for supplying fluid under pressure to said one of the chambers.

2. Apparatus as claimed in claim 1, in which the cassette has a plurality of ports separated by flanges on the cassette, and there are a like number of pigs in the cassette which can be launched individually by the application of fluid pressure to a selected one of the chambers defined by the flanges.

3. Apparatus as claimed in claim 2 in which the cassette can be mounted in two mutually reversed positions in the barrel for launching and receiving pigs respectively.

4. Apparatus as claimed in claim 1 in which the interior of the barrel is divided into chambers by flanging on the cassette, and the cassette has ports arranged at opposite ends thereof, the apparatus being usable for launching or receiving a single elongated pig.

5. Pig launching and receiving apparatus substantially as hereinbefore described with reference to the accompanying drawings.

FIG 1

FIG 2

FIG 3

FIG 4

FIG 5

FIG 6

FIG 7

FIG 8

FIG 9

FIG 10

FIG 11

FIG 12